# NEUE EUROPÄISCHE PATENTSCHRIFT

(11) **EP 3 287 347 B2**
(45) Veröffentlichungstag und Bekanntmachung des Hinweises auf die Entscheidung über den Einspruch: **10.01.2024**
(45) Hinweis auf die Patenterteilung: 30.12.2020
(21) Anmeldenummer: 17186806.0
(22) Anmeldetag: 18.08.2017
(51) Int. Cl.: B62D 59/04

(54) **HILFSANTRIEB FÜR EINEN ANHÄNGER UND ANHÄNGER**
AUXILIARY DRIVE FOR A TRAILER AND TRAILER
ENTRAÎNEMENT D'ASSISTANCE POUR UNE REMORQUE ET REMORQUE

(30) Priorität: 26.08.2016 DE 202016104710 U
(43) Veröffentlichungstag der Anmeldung: 28.02.2018
(60) Teilanmeldung: 20184779.5
(73) Patentinhaber: Reich GmbH Regel- und Sicherheitstechnik, 35713 Eschenburg-Wissenbach (DE)
(72) Erfinder: Bender, Steffen, 35713 Eschenburg (DE)
(74) Vertreter: Hofstetter, Schurack & Partner

(56) Entgegenhaltungen:
- EP-A1- 1 764 274
- EP-A1- 2 138 386
- EP-A1- 2 206 641
- EP-A1- 2 551 173
- DE-A1- 3 736 788
- DE-A1-102013 107 914
- DE-U1- 20 306 487
- DE-U1-202009 005 524
- GB-A- 2 514 870

## Beschreibung

Die vorliegende Erfindung betrifft einen Hilfsantrieb für einen Anhänger, insbesondere einen Wohnwagen, einen Bootsanhänger, einen Verkaufswagen, einen Transportanhänger oder einen Autotransportanhänger, wobei der Hilfsantrieb mindestens ein Antriebselement, welches mit einer Lauffläche eines Anhängerrades in Eingriff bringbar ist und mindestens eine Befestigungs- und Abstützvorrichtung zur Befestigung und Abstützung des Hilfsantriebs an dem Anhänger umfasst. Die Erfindung betrifft weiterhin einen Anhänger mit mindestens einem Hilfsantrieb.

Hilfsantriebe für Anhänger, insbesondere für Wohnwagen, Bootsanhänger, Verkaufswagen, Transportanhänger und ähnliche Anhänger sind in einer großen Vielzahl bekannt. Sie dienen insbesondere dazu, den Anhänger in abgekoppeltem Zustand zu bewegen. Dies betrifft insbesondere Anhänger, die beispielsweise auf Campingplätzen oder Wohnwagen-Parkplätzen bewegt und rangiert werden müssen. Bei diesen bekannten Hilfsantrieben ist mindestens ein Antriebselement, insbesondere eine Antriebswalze mit einem Rad des Anhängers in Eingriff bringbar. Mithilfe entsprechender Antriebseinheiten, zum Beispiel Elektromotoren, wird die Antriebswalze angetrieben, wodurch sich das mit der Antriebswalze in Eingriff befindliche Rad des Anhängers dreht beziehungsweise bewegt. Damit ist ein sicheres Rangieren des Anhängers in abgekoppeltem Zustand möglich Einen solchen Hilfsantrieb und ein solcher Anhänger ist aus der DE 10 2013 107 914 A1 bekannt, die den Oberbegriff des Anspruchs 1 offenbart.

Aufgrund geänderter Rahmenbedingungen, wie zum Beispiel neue Führerscheinregelungen, die Tendenz zu weniger stark motorisierten kraftstoffsparenden Zugfahrzeugen und Kraftstoffeinsparung im Zugbetrieb, bekommt auch für Anhänger der oben beschrieben Art der Leichtbau eine zunehmende Bedeutung. Diese Maßnahmen erschweren aber zugleich den üblichen Anbau von Hilfsantrieben beziehungsweise Rangierhilfen am Chassis des Anhängers, beispielsweise aufgrund geringerer Materialstärken. Dadurch ist das Chassis nicht mehr in der Lage, die beim Rangieren mit dem Hilfsantrieb auftretenden und die zum Beispiel den Längsträger eingetragenen Kräfte aufzunehmen. Letztendlich führt dies zum Versagen (Verbiegen, Brechen) des Längsträgers. Dies gilt im Besonderen bei einer Anordnung des Hilfsantriebs in Fahrtrichtung vor der Achse. Die Befestigungs- und Abstützvorrichtung für den Hilfsantrieb müsste folglich stärker/schwerer ausgeführt werden, um die auftretenden Kräfte aufnehmen zu können. Gleiches gilt für den Längsträger. Damit ergäbe sich aber eine erheblich geringere bzw. überhaupt keine Gewichtseinsparung des Gesamtsystems.

Es ist daher Aufgabe der vorliegenden Erfindung, einen gattungsgemäßen Hilfsantrieb und einen gattungsgemäßen Anhänger mit mindestens einem Hilfsantrieb bereitzustellen, durch die einerseits eine sichere Befestigung des Hilfsantriebs an dem Anhänger und gleichzeitig eine verbesserte Krafteinleitung der beim Rangieren mit dem Hilfsantrieb auftretenden Kräfte gewährleistet ist.

Zur Lösung dieser Aufgaben dienen ein Hilfsantrieb mit den Merkmalen des Anspruchs 1 sowie ein Anhänger mit den Merkmalen des Anspruchs 2. Vorteilhafte Ausgestaltungen mit zweckmäßigen Weiterbildungen der Erfindung sind in den Unteransprüchen angegeben, wobei vorteilhafte Ausgestaltungen des Hilfsantriebs als vorteilhafte Ausgestaltungen des erfindungsgemäßen Anhängers und umgekehrt anzusehen sind.

Die vorliegende Erfindung betrifft einen Hilfsantrieb gemäß Anspruch 1 für einen Anhänger, insbesondere einen Wohnwagen, einen Bootsanhänger, einen Verkaufswagen, einen Transportanhänger oder einen Autotransportanhänger, wobei der Anhänger ein Chassis und einen Wohn- oder Arbeitsaufbau umfasst und der Hilfsantrieb mindestens ein Antriebselement, welches mit einer Lauffläche des Anhängerrades in Eingriff bringbar ist und mindestens eine Befestigungs- und Abstützvorrichtung zur Befestigung und Abstützung des Hilfsantriebs an dem Anhänger umfasst. Dabei ist die Befestigungs- und Abstützvorrichtung an einer Seiten- und/oder Bodenwand des Wohn- oder Arbeitsaufbaus und/oder einem Übergangsbereich zwischen der Seiten- und Bodenwand des Wohn- oder Arbeitsaufbaus angeordnet. Eine derartige erfindungsgemäße Anordnung der Befestigungs- und Abstützvorrichtung ermöglicht einerseits eine sichere Befestigung des Hilfsantriebs an dem Anhänger und gleichzeitig eine verbesserte Krafteinleitung der beim Rangieren mit dem Hilfsantrieb auftretenden Kräfte, nämlich in die genannten Elemente des Wohn- oder Arbeitsaufbaus des Anhängers. Dies gilt sowohl für Anhänger mit selbsttragend ausgebildeten Wohn- und Arbeitsaufbauten, wie auch für Anhänger, bei denen der Wohn-oder Arbeitsaufbau auf einem Stützrahmen beziehungsweise einem Chassis des Anhängers angeordnet ist. Des Weiteren kann durch die erfindungsgemäße Anordnung der Befestigungs- und Abstützvorrichtung gewährleistet werden, dass die Bodenfreiheit zwischen dem Anhänger und dem Boden durch den Hilfsantrieb nicht oder nur unwesentlich verringert wird.

Erfindungsgemäß weist die Befestigungs- und Abstützvorrichtung mindestens eine Schraub- und/oder Klemm- und/oder Steckverbindung zur direkten Befestigung eines Gehäuses des Hilfsantriebs an der Seiten- und/oder Bodenwand und/oder dem genannten Übergangsbereich auf.

Die Erfindung betrifft weiterhin einen Anhänger, insbesondere einen Wohnwagen, Bootsanhänger, Verkaufswagen, Transportanhänger oder Autotransportanhänger, umfassend mindestens einen Hilfsantrieb wie im Vorhergehenden beschrieben. Die unterschiedlichen Ausführungsformen und deren Vorteile ergeben sich aus den vorhergehenden Ausführungen zu den erfindungsgemäßen Ausgestaltungen des Hilfsantriebs.

In weiteren vorteilhaften Ausgestaltungen des erfindungsgemäßen Anhängers ist der Wohn- oder Arbeitsaufbau des Anhängers selbsttragend ausgebildet. Insbesondere bei Wohn- und Arbeitsaufbauten wie auch bei Anhängern, die insgesamtin sogenannter Leichtbauweise hergestellt sind, ergeben sich Vorteile, wie zum Beispiel eine Kraftstoffeinsparung im Zugbetrieb. Es ist daher auch möglich, dass der Wohn-oder Arbeitsaufbau des Anhängers auf einem Stützrahmen des Anhängers angeordnet ist.

In weiteren vorteilhaften Ausgestaltungen des erfindungsgemäßen Anhängers umfasst der Stützrahmen des Anhängers mindestens zwei parallel zueinander verlaufende Längsträger. Es ist aber auch möglich, dass der Stützrahmen zwei V-förmig zueinander angeordnete Längsträger umfasst. Vorteilhafterweise ist die Befestigungs- und Abstützvorrichtung derart ausgebildet, dass sie an einer Vielzahl von Längsträgertypen angeordnet und damit verwendet werden kann. Der Stützrahmen kann zum Beispiel zumindest teilweise aus einem Leichtmetall, einem faserverstärktem Kunststoff oder einer Kombination aus diesen Materialien bestehen.

Auch der Wohn- oder Arbeitsaufbau kann zumindest teilweise aus einem Leichtmetall, einem faserverstärkten Kunststoff oder einer Kombination aus diesen Materialien bestehen. Des Weiteren ist die Befestigungs- und Abstützvorrichtung derart angeordnet, dass ein Antriebselement des Hilfsantriebs in einem Bereich einer Lauffläche eines Anhängerrades des Anhängers positioniert ist. Dadurch ist ein sicherer Antrieb des Anhängers mittels des Hilfsantriebs gewährleistet.

Es zeigen
Figur 1 eine schematische Darstellung eines nicht-erfindungsgemäßen Hilfsantriebs;
Figur 2 eine schematische Darstellung des nicht-erfindungsgemäßen Hilfsantriebs gemäß Figur 1 aus einem anderen Blickwinkel;
Figur 3 eine schematische, teilweise geschnittene Darstellung des nicht-erfindungsgemäßen Hilfsantriebs gemäß den Figuren 1 und 2;
Figur 4 eine schematische Darstellung eines nicht-erfindungsgemäßen Hilfsantriebs gemäß einer zweiten Ausführungsform;
Figur 5 eine schematische Darstellung des nicht-erfindungsgemäßen Hilfsantriebs gemäß Figur 4 aus einem anderen Blickwinkel;
Figur 6 eine schematische, teilweise geschnittene Darstellung des nicht-erfindungsgemäßen Hilfsantriebs gemäß den Figuren 4 und 5;
Figur 7 eine schematische, teilweise geschnittene Darstellung des nicht-erfindungsgemäßen Hilfsantriebs gemäß einer dritten Ausführungsform;
Figur 8 eine schematische, teilweise geschnittene Darstellung des nicht-erfindungsgemäßen Hilfsantriebs gemäß einer vierten Ausführungsform; und
Figur 9 eine schematische, teilweise geschnittene Darstellung des nicht-erfindungsgemäßen Hilfsantriebs gemäß einer fünften Ausführungsform.

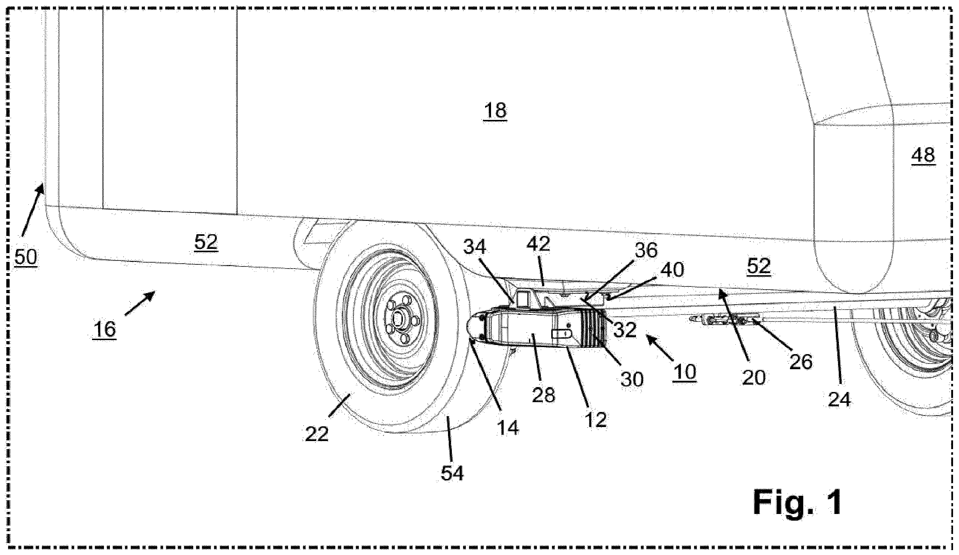

Die Figur 1 zeigt eine schematische Darstellung eines Hilfsantriebs 12. Bei dem Hilfsantrieb 12 handelt es sich um einen zusätzlichen Antrieb für einen Anhänger, insbesondere einen hier dargestellten Wohnwagen. Unter Anhänger werden auch beispielsweise Bootsanhänger, Verkaufswagen, Transportanhänger oder Autotransportanhänger oder ähnliche Anhänger verstanden. Der Hilfsantrieb 12 umfasst dabei an ein walzenartiges Antriebselement 14, welches zum Eingriff mit einer Lauffläche 54 eines Anhängerrades 22 ausgebildet ist. Das Antriebselement 14 ist dabei in einer Gehäusehalterung eines Gehäuses 28 des Hilfsantriebs 12 drehbar gelagert. In Fig. 1 ist der Hilfsantrieb 12 in einem nicht-zugeschwenkten Zustand dargestellt. Dies bedeutet, dass das Antriebselement 14 nicht in Eingriff mit dem Anhängerrad 22 beziehungsweise dessen Lauffläche 54 steht. Um eine Bewegung des Anhängerrads 22 zu ermöglichen, muss das Antriebselement 14 in Eingriff mit der Lauffläche 54 gebracht werden. Durch eine Drehung des Antriebselements 14 wird dann das Anhängerrad 22 bewegt. Der Hilfsantrieb 12 umfasst zudem elektronische und elektrische Komponenten, wie zum Beispiel den Motor für das Antriebselement 14 sowie Anschwenkmotoren und -führungen zur Betätigung einer Zustellvorrichtung 30 für das Antriebselement 14 sowie eine Steuerelektronik (nicht dargestellt). Die zuletzt genannten Komponenten sind innerhalb des Gehäuses 28 des Hilfsantriebs 12 angeordnet. Das An- und Abschwenken des Antriebselements 14 erfolgt durch ein entsprechendes Verschieben von zumindest Teilelementen des Hilfsantriebs 12 relativ zu einem Wohn- oder Arbeitsaufbau 16 des Anhängers. In dem dargestellten Ausführungsbeispiel ist der Wohn- oder Arbeitsaufbau 16 selbsttragend ausgebildet. Selbstverständlich kann der Hilfsantrieb 12 aber auch bei Anhängern mit Fahrgestell verwendet werden.

Des Weiteren erkennt man, dass der Hilfsantrieb 12 über ein Befestigungselement 34 mit einem Tragarm 32 verbunden ist. Aus Fig. 1 wird zudem deutlich, dass der Hilfsantrieb 12 unterhalb des Wohn- oder Arbeitsaufbaus 16 und davon beabstandet angeordnet ist. Die Abstützung und Befestigung des Hilfsantriebs 12 erfolgt über eine Befestigungs- und Abstützvorrichtung 10. Man erkennt, dass die Befestigungs- und Abstützvorrichtung 10 derart ausgebildet ist, dass sie an einer Bodenwand 20 des Wohnaufbaus 16 des Anhängers unter Zwischenschaltung eines an der Bodenwand 20 angeordneten Zwischenelementes 42 anordenbar ist. Die Befestigungs- und Abstützvorrichtung 10 weist dabei eine Schraubverbindung zur Befestigung des Tragarms 32 des Hilfsantriebs 12 an der Bodenwand 20 beziehungsweise dem an der Bodenwand angeordneten Zwischenelement 42 auf. Man erkennt, dass hierfür der Tragarm 32 eine Anschlussplatte 36 aufweist, die in dem dargestellten Ausführungsbeispiel mit dem Tragarm 32 verschweißt ist. Es besteht aber auch die Möglichkeit, dass die Anschlussplatte 36 mit dem Tragarm 32 verschraubt, verklebt und/oder über eine Klemm- oder Steckverbindung verbunden ist. Zudem besteht die Möglichkeit, dass die Anschlussplatte 36 mit dem Tragarm 32 einstückig ausgebildet ist.

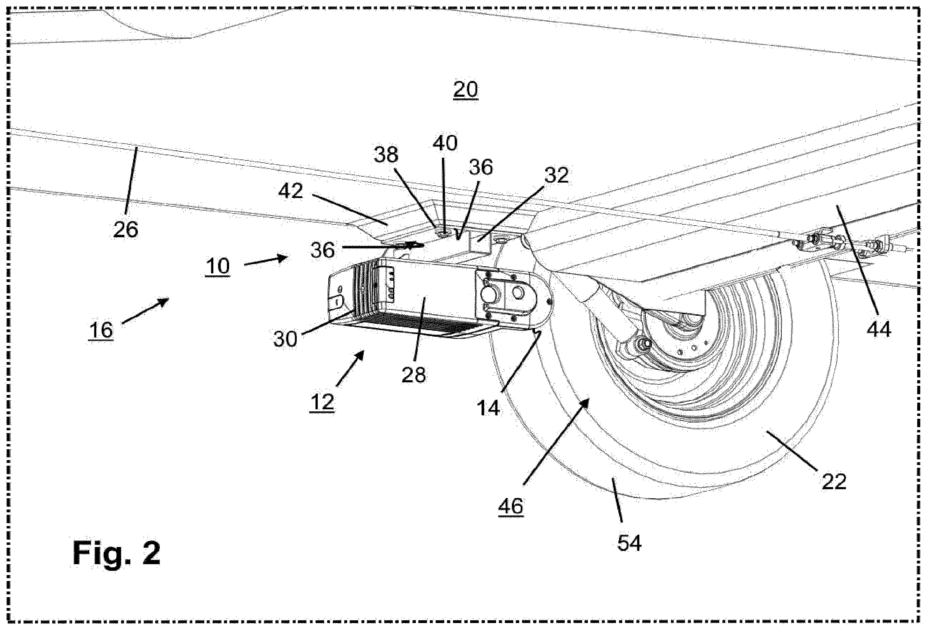

In Zusammenschau mit der Fig. 2, die eine schematische Darstellung des Hilfsantriebs 12 gemäß Fig. 1 aus einem anderen Blickwinkel zeigt, wird deutlich, dass die Anschlussplatte 36 mehrere Öffnungen 38 zur Aufnahme jeweils einer Schraubverbindung 40 zur Befestigung der Anschlussplatte 36 mit dem Zwischenelement 42 und damit der Bodenwand beziehungsweise Bodenplatte 20 des Wohnaufbaus 16 des Anhängers aufweist. Zudem wird aus Fig. 2 deutlich, dass in dem dargestellten Ausführungsbeispiel der Tragarm 32 eine ungefähr quadratische Querschnittsform aufweist und hohl ausgebildet ist. Dabei kann die Querschnittsform des Tragarms 32 geschlossen oder auch offen ausgebildet sein.

Fig.2 zeigt zudem die Anordnung eines Bremszugs 26 sowie einer Radaufhängung 46 des Anhängers. Zudem ist an der Bodenwand 20 eine Achsverkleidung 44 ausgebildet, die ungefähr quer zur Fahrtrichtung des Anhängers verläuft.

Fig. 1 zeigt wiederum den grundsätzlichen Aufbau des Wohnaufbaus 16 des dargestellten Anhängers. Man erkennt die Anordnung einer Seitenwand 18, die über einen gewölbten Übergangsbereich 52 in die Bodenwand beziehungsweise Bodenplatte 20 des Anhängers mündet. Der Übergangsbereich 52 ist auch im Bereich zwischen einer Vorderwand 48 und einer Rückwand 50 des Anhängers und der Bodenwand 20 ausgebildet. Des Weiteren zeigt Fig. 1 die Anordnung einer Radachse 24 zum Antrieb der Anhängerräder 22. Die einzelnen Elemente des dargestellten Wohnwagens können zumindest teilweise in Leichtbauweise hergestellt sein. Zudem kann der Wohnaufbau 16 selbsttragend ausgebildet sein.

Aus Fig. 2 wird zudem deutlich, dass das Zwischenelement 42 plateauartig ausgebildet ist, wobei die Form und Ausdehnung des in Richtung Boden gerichteten Plateaus der Form und Größe der Anschlussplatte 36 entspricht.

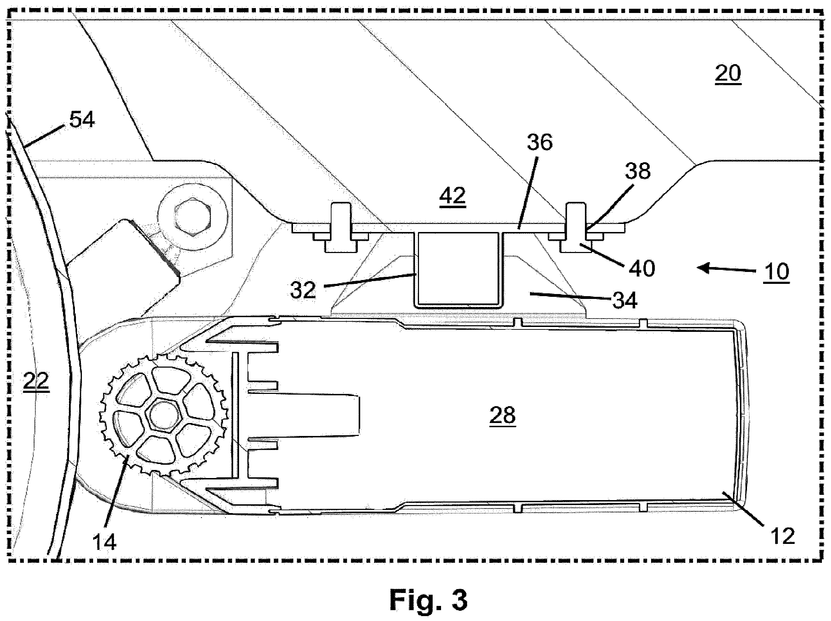

Fig. 3 zeigt eine schematische, teilweise geschnittene Darstellung des Hilfsantriebs 12 gemäß den Figuren 1 und 2. Man erkennt die Anordnung des Antriebselementes 14 in Richtung der Lauffläche 54 des Anhängerrades 22. Des Weiteren wird deutlich, dass das Gehäuse 28 über das Befestigungselement 34 mit dem Tragarm 32 verbunden ist. An dem Tragarm 32 ist wiederum die Anschlussplatte 36 angeschweißt, wobei über die Öffnungen 38 in der Anschlussplatte 36 Schraubverbindungen 40 einführbar sind. Die Schraubverbindungen 40 verbinden die Anschlussplatte 36 und damit den Tragarm 32 mit dem Hilfsantrieb 12 mit dem an der Bodenplatte 20 ausgebildeten Zwischenelement 42. Es wird deutlich, dass in dem dargestellten Ausführungsbeispiel das Zwischenelement 42 einstückig mit der Bodenwand 20 ausgebildet ist. Es handelt sich also um eine Art Verdickung oder Ausbuchtung der Bodenwand 20. Das Zwischenelement 42 kann aber auch als separates Element gefertigt sein und über entsprechende Verbindungsmittel mit der Bodenwand 20 verbunden sein.

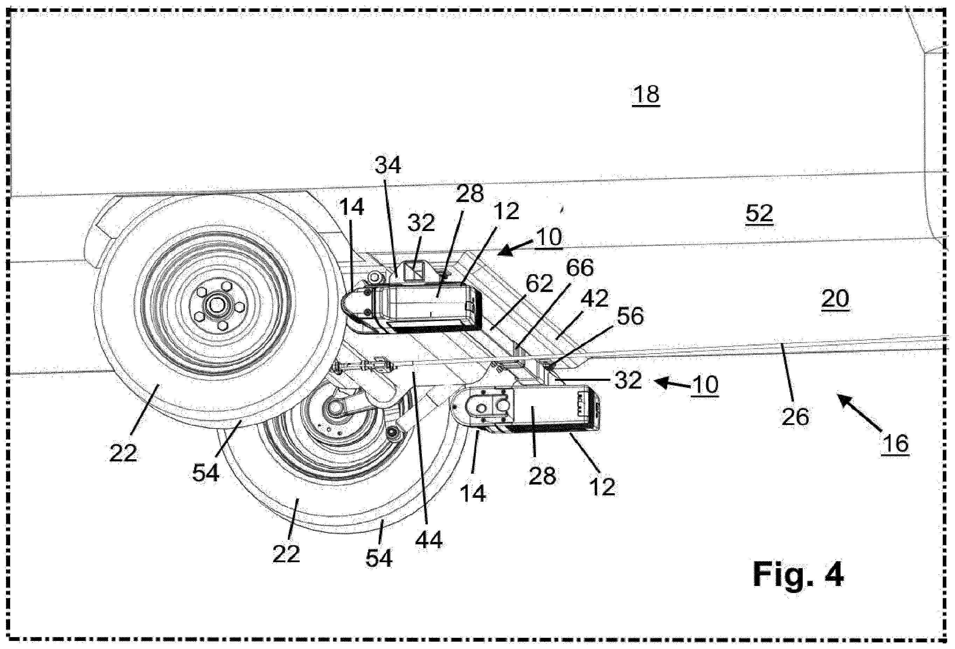

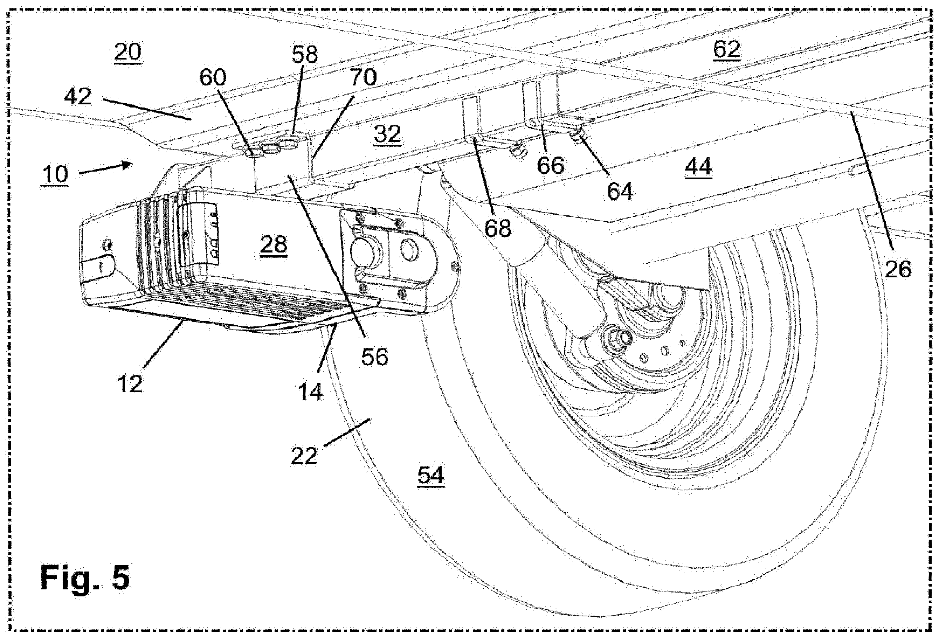

Fig. 4 zeigt eine schematische Darstellung eines Hilfsantriebs 12 gemäß einer zweiten Ausführungsform. In dem dargestellten Ausführungsbeispiel sind zwei Hilfsantriebe 12 gezeigt, die jeweils im Bereich der Anhängerräder 22 angeordnet sind. Jeder Hilfsantriebe 12 weist wiederrum ein walzenförmiges Antriebselement 14 auf, das zum Eingriff mit dem Anhängerrad 22 beziehungsweise dessen Lauffläche bringbar ist. Des Weiteren erkennt man, dass jeder Hilfsantrieb 12 an einem entsprechenden Tragarm 32 über das Befestigungselement 34, welches mit dem Gehäuse 28 des Hilfsantriebs 12 verbunden ist, befestigt ist. Die beiden Tragarme 32 sind über eine Querstrebe 62 miteinander verbunden. In Zusammenschau mit Fig. 5, welche eine schematische Darstellung des Hilfsantriebs 12 gemäß Fig. 4 aus einem anderen Blickwinkel zeigt, wird deutlich, dass die entsprechenden Enden der Querstrebe 62 in eines von dem Anhängerrad 22 abgewandten Ende des Tragarms 32 gesteckt und über Fixierschrauben 64 zueinander lagefixiert sind. Über Gewindebohrungen 68, die einerseits durch Verstärkungselemente 66, die an der Außenseite des Tragarms 32 angeordnet sind, und andererseits durch den Tragarm 32 selbst gerichtet sind, in Kontakt mit der Querstrebe 62 gebracht. Des Weiteren erkennt man, dass die Tragarme 32 über jeweilige Halteelemente 56 an dem Zwischenelement 42 gehalten werden. Das Zwischenelement 42 ist wiederum an der Bodenwand 20 des Wohnaufbaus 16 des Anhängers ausgebildet. In Zusammenschau mit Fig. 4 erkennt man, dass in dem dargestellten Ausführungsbeispiel das Zwischenelement 42 wiederrum als plateauartiger Vorsprung ausgebildet ist, der sich über die gesamte oder über nahezu die gesamte Erstreckung der Bodenwand 20 quer zu den Seitenwänden 18 des Anhängers erstreckt. Die Haltelemente 56 sind dabei im Bereich der jeweiligen gegenüberliegenden Enden des Zwischenelementes 42 an diese fixiert.

Aus Fig. 5 wird zudem deutlich, dass das Halteelement 56 zwei seitlich abstehende Befestigungsflansche 58 zur Befestigung des Halteelementes 56 an dem Zwischenelement 42 aufweist. über entsprechende Öffnungen beziehungsweise Bohrungen in den Flanschen 58 können wiederum Schraubverbindungen 60 zur Verbindung mit dem Zwischenelement 42 eingebracht werden. Die Befestigungsflansche 58 können aber auch mit dem Zwischenelement 42 und/oder der Seiten- und/oder Bodenwand 18, 20 und/oder dem Übergangsbereich 52 verklebt, geklemmt oder verschweißt werden.

Zudem erkennt man, dass durch die lösbare Verbindung der Querstrebe 62 mit dem jeweiligen Tragarm 32 die Querstrebe 62 insgesamt mit den Tragarmen 32 teleskopierbar ist. Das Halteelement 56 weist zudem einen Aufnahmesitz 70 zur Aufnahme des Tragarms 32 auf. In dem dargestellten Ausführungsbeispiel weist der Aufnahmesitz 70 eine der Querschnittsform des Tragarms 32 angepasste Querschnittsform auf. Damit ist ein sicherer Sitz beziehungsweise Halt des Tragarms 32 in dem Halteelement 56 gewährleistet.

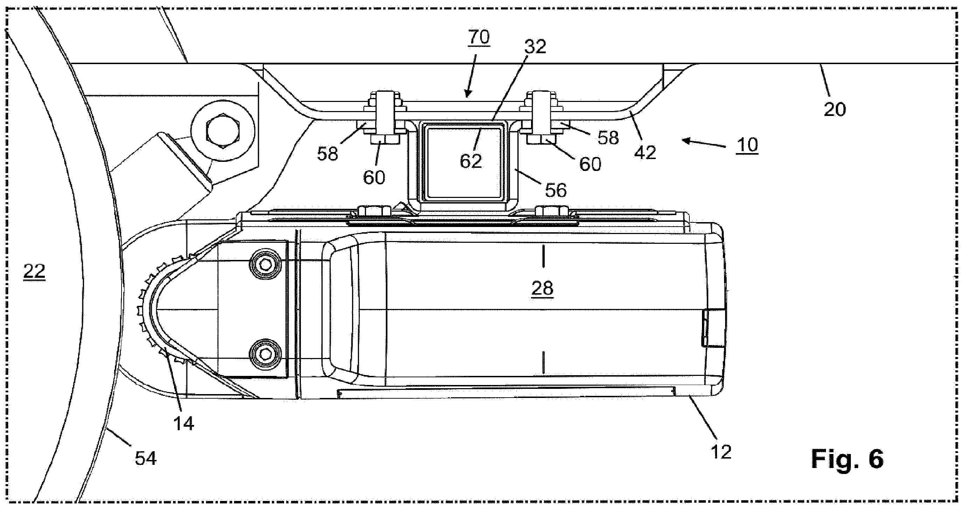

Fig. 6 zeigt eine schematische, teilweise geschnittene Darstellung des Hilfsantriebs 12 gemäß den Figuren 4 und 5. Man erkennt wiederum die Ausgestaltung des Hilfsantriebs 12 mit dem Antriebselement 14, welches in Richtung der Lauffläche 54 des Anhängerrades 22 zeigt. Das Gehäuse 28 des Hilfsantriebs 12 ist wie in den Figuren 4 und 5 beschrieben über das Befestigungselement 34 mit dem Tragarm 32 verbunden. Innerhalb des Tragarms 32 ist die Querstrebe 62 zumindest teilweise geführt. Der Tragarm 32 weist eine ungefähr quadratische geschlossene Querschnittsform auf. Entsprechend ist der Aufnahmesitz 70 des Halteelementes 56 geformt. Man erkennt die Passgenauigkeit zwischen dem Aufnahmesitz 70, dem Tragarm 32 und der innerhalb des Tragarms zumindest teilweise geführten Querstrebe 62. Des Weiteren wird aus Fig. 6 die Befestigung der Befestigungsflansche 58 über die Schraubverbindungen 60 an dem als zumindest teilweises Hohlelement ausgebildeten Zwischenelement 42. Das Zwischenelement 42 ist wiederum an der Bodenwand 20 angeordnet und damit fixiert. Es besteht aber auch die Möglichkeit, dass auch gemäß diesem Ausführungsbeispiel das Zwischenelement 42 einstückig mit der Bodenwand ausgeführt ist.

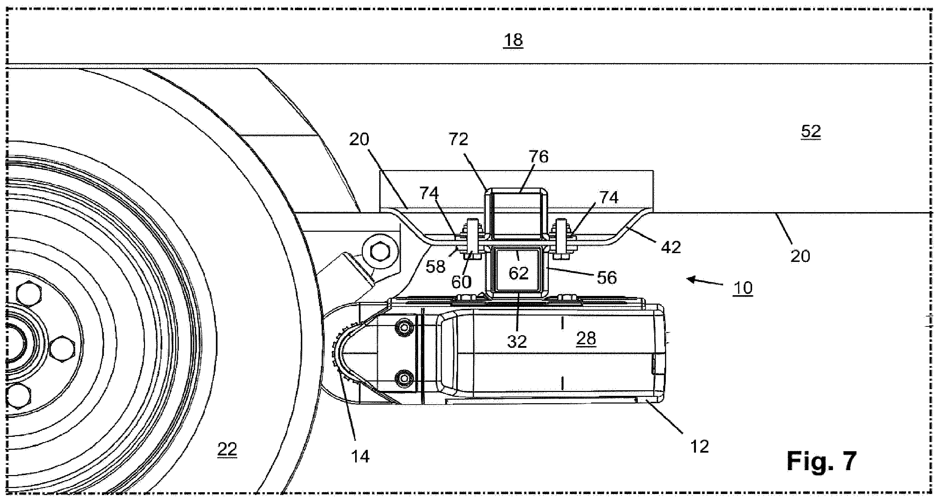

Fig. 7 zeigt eine schematische, teilweise geschnittene Darstellung eines Hilfsantriebs 12 gemäß einer dritten Ausführungsform. Man erkennt, dass die Befestigungs- und Abstützvorrichtung 10 ein zweites Halteelement 72 aufweist, wobei das zweite Halteelement 72 an einer Innenseite des Zwischenelementes 42 und einer Innenseite der Bodenwand 20 angeordnet ist. Des Weiteren wird deutlich, dass die Anordnung des zweiten Halteelementes 72 derart erfolgt, dass es mit dem außenliegenden Halteelement 56 verbindbar ist. In dem dargestellten Ausführungsbeispiel ist das zweite Halteelement als separates Element ausgebildet und weist zwei seitlich quer abstehende Befestigungsflansche 74 auf. Die Befestigungsflansche 74 liegen an der Innenseite des Zwischenelementes 42 an und dienen zur Befestigung des zweiten Halteelementes 72 an dem außenliegenden Halteelement 56. Die Befestigung erfolgt dabei über die Schraubverbindungen 60, die über entsprechende Öffnungen in den Befestigungsflanschen 58, 74 und dem Zwischenelement 42 einbringbar sind.

Des Weiteren erkennt man, dass das zweite Halteelement 72 einen Aufnahmesitz zur Aufnahme einer Verstärkungsstrebe 76 aufweist. Die Verstärkungsstrebe 76 ist in dem dargestellten Ausführungsbeispiel als Vierkantrohr ausgebildet.

Auch in diesem Ausführungsbeispiel weist der Hilfsantrieb 12 ein Antriebselement 14 auf, welches in Richtung der Lauffläche 54 des Anhängerrades zeigt. Das Gehäuse 28 des Hilfsantriebs 12 ist wie in den vorhergehenden Ausführungsbeispielen über ein Befestigungselement 34 (nicht dargestellt) mit dem Tragarm 32 verbunden. Innerhalb des Tragarms 32 ist die Querstrebe 62 zumindest teilweise geführt. Der Tragarm 32 ist in dem Halteelement 56 gehalten.

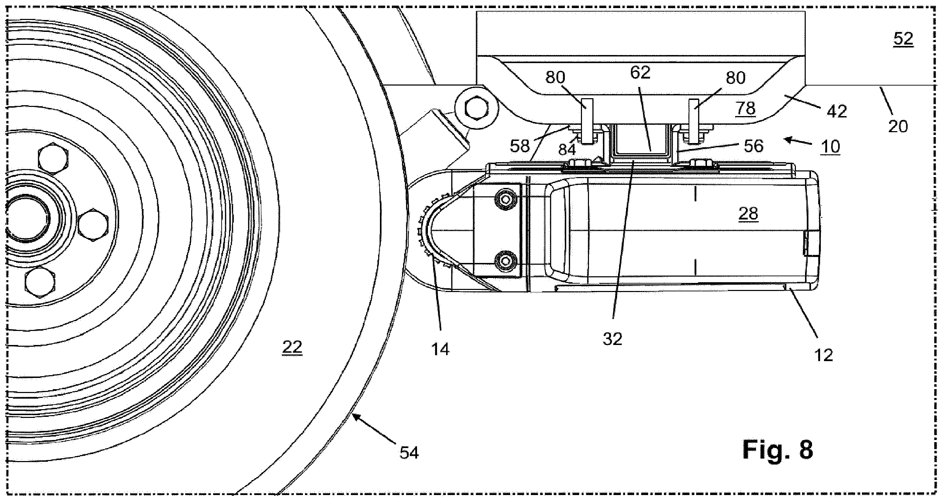

Fig. 8 zeigt eine schematische teilweise geschnittene Darstellung eines Hilfsantriebs 12 gemäß einer vierten Ausführungsform. Man erkennt wiederum die Ausgestaltung des Hilfsantriebs 12 mit dem Antriebselement, welches in Richtung der Lauffläche 54 des Anhängerrads 22 zeigt. Das Gehäuse 28 des Hilfsantriebs 12 ist wie in den vorhergehend beschriebenen Ausführungsbeispielen an dem Tragarm 32 befestigt. Innerhalb des Tragarms 32 ist wiederum die Querstrebe 62 zumindest teilweise geführt. Der Tragarm 32 ist wiederum in dem Halteelement 56 gelagert beziehungsweise gehalten. Im Unterschied zu den im Vorhergehenden beschriebenen Ausführungsbeispielen des Hilfsantriebs 12 weist hier die Befestigungs- und Abstützvorrichtung 10 zwei separat ausgebildete und an dem Zwischenelement 42 des Wohnaufbaus 16 angebrachte Befestigungsbolzen 80 zur Befestigung der Befestigungsflansche 58 des Halteelementes 56 auf. Der Befestigungsbolzen 80 ist in dem dargestellten Ausführungsbeispiel derart ausgebildet, dass er mit dem Befestigungsflansch 58 mittels einer auf dem Bolzen aufschraubbaren Gewindemutter 84 verschraubbar ist. Zudem wird deutlich, dass zumindest ein Ende des Befestigungsbolzens 80 innerhalb einer Wand des Zwischenelementes 42 angeordnet ist. Der Befestigungsbolzen 80 kann dabei mit der Wand 78 des Zwischenelementes 42 mittels einer Schraub- oder Steckverbindung oder mittels Verschweißen oder Verkleben verbunden sein. Es besteht aber auch die Möglichkeit, dass der Befestigungsbolzen 80 einstückig mit der Wand 78 ausgebildet ist.

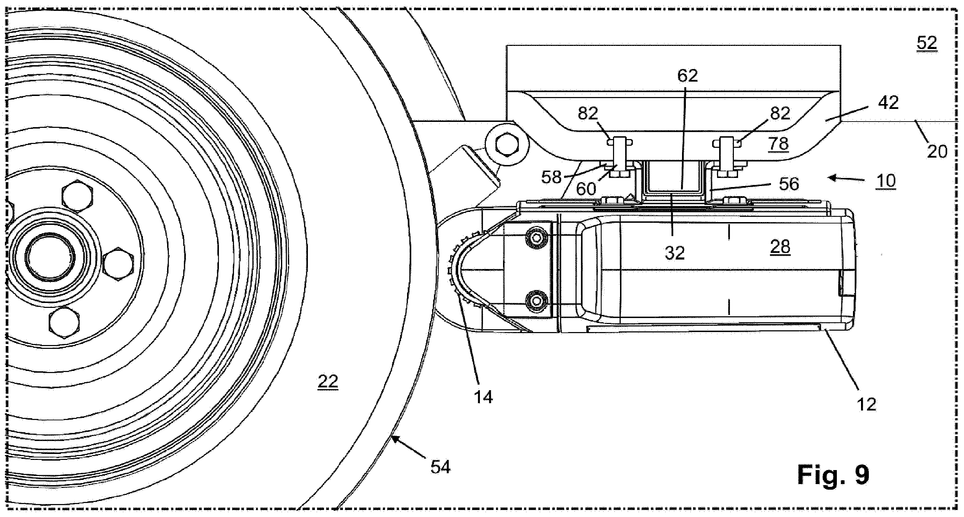

Fig. 9 zeigt eine schematische, teilweise geschnittene Darstellung eines Hilfsantriebs 12 gemäß einer fünften Ausführungsform. Im Unterschied zu den im Vorhergehenden beschriebenen Ausführungsformen des Hilfsantriebs 12 gemäß der vorliegenden Ausführungsform eine Befestigungs- und Abstützvorrichtung 10 auf, die mehrere Gegenlager 82 zur Aufnahme jeweils eines durch eine entsprechende Öffnung des Befestigungsflansches 58 geführten Verbindungselementes 60 umfasst. In dem dargestellten Ausführungsbeispiel ist das Verbindungselement 60 eine Schraubverbindung. Man erkennt, dass das Gegenlager 82 in dem Zwischenelement 42 beziehungsweise der Wand 78 des Zwischenelementes 42 angeordnet ist. Das Gegenlager 82 sowie das Verbindungselement 60 können aber auch derart ausgebildet sein, dass sie miteinander verklemmbar oder steckbar sind. Des Weiteren erkennt man aus Fig. 9, dass in dem dargestellten Ausführungsbeispiel das Gegenlager 82 mit dem Zwischenelement 42 vergossen ist. Bezüglich der weiteren Merkmale des hier dargestellten Hilfsantriebs 12 verweisen wir auf die entsprechenden Merkmale der im Vorhergehenden beschriebenen Ausführungsbeispiele.

Die Befestigungs- und Abstützvorrichtung 10 besteht üblicherweise aus Metall oder Kunststoff oder einer Kombination daraus.

## Patentansprüche

1. Hilfsantrieb für einen Anhänger, insbesondere einen Wohnwagen, einen Bootsanhänger, einen Verkaufswagen, einen Transportanhänger oder einen Autotransportanhänger, wobei der Anhänger ein Chassis und einen Wohn- oder Arbeitsaufbau umfasst und der Hilfsantrieb (12) mindestens ein Antriebselement (14), welches mit einer Lauffläche (54) eines Anhängerrades (22) in Eingriff bringbar ist und mindestens eine Befestigungs- und Abstützvorrichtung (10) zur Befestigung und Abstützung des Hilfsantriebs (12) an dem Anhänger umfasst, **dadurch gekennzeichnet, dass** die Befestigungs- und Abstützvorrichtung (10) an einer Seiten- und/oder Bodenwand (18, 20) des Wohn- oder Arbeitsaufbaus (16) und/oder einem Übergangsbereich (52) zwischen der Seiten- und Bodenwand (18, 20) des Wohn- oder Arbeitsaufbaus (16) angeordnet ist, wobei die Befestigungs- und Abstützvorrichtung (10) mindestens eine Schraub- und/oder Klemm- und/oder Steckverbindung zur direkten Befestigung eines Gehäuses (28) des Hilfsantriebs (12) an der Seiten- und/oder Bodenwand (18, 20) und/oder dem Übergangsbereich (52) aufweist.

2. Anhänger, insbesondere Wohnwagen, Bootsanhänger, Verkaufswagen, Transportanhänger oder Autotransportanhänger, umfassend mindestens einen Hilfsantrieb (12) gemäß dem Anspruch 1.

3. Anhänger nach Anspruch 2, **dadurch gekennzeichnet, dass** der Wohn- oder Arbeitsaufbau (16) des Anhängers selbsttragend ausgebildet ist.

4. Anhänger nach Anspruch 2, **dadurch gekennzeichnet, dass** der Wohn- oder Arbeitsaufbau (16) des Anhängers auf einem Stützrahmen des Chassis des Anhängers angeordnet ist oder dass der Wohn- oder Arbeitsaufbau (16) des Anhängers auf einem Stützrahmen des Anhängers angeordnet ist und der Stützrahmen des Chassis mindestens zwei parallel zueinander verlaufende Längsträger umfasst oder dass der Wohn- oder Arbeitsaufbau (16) des Anhängers auf einem Stützrahmen des Chassis des Anhängers angeordnet ist oder dass der Wohn- oder Arbeitsaufbau (16) des Anhängers auf einem Stützrahmen des Chassis des Anhängers angeordnet ist und der Stützrahmen des Chassis zwei V-förmig zueinander angeordnete Längsträger umfasst.

5. Anhänger nach einem der Ansprüche 2 bis 4, **dadurch gekennzeichnet, dass** der Wohn- oder Arbeitsaufbau (16) und/oder der Stützrahmen des Chassis zumindest teilweise aus einem Leichtmetall, einem faserverstärktem Kunststoff oder einer Kombination aus diesen Materialien besteht.

## Claims

1. An auxiliary drive for a trailer, in particular a camper, a boat trailer, a sales vehicle, a transport trailer or a car transport trailer, wherein the trailer includes a chassis and a living or working structure and the auxiliary drive (12) includes at least one drive element (14), which can be engaged with a tread (54) of a trailer wheel (22) and includes at least one attachment and support device (10) for attaching and supporting the auxiliary drive (12) on the trailer, **characterized in that** the attachment and support device (10) is arranged on a side wall and/or bottom wall (18, 20) of the living or working structure (16) and/or on a transition area (52) between the side wall and bottom wall (18, 20) of the living or working structure (16), wherein the attachment and support device (10) comprises at least one screwing and/or clamping and/or plug connection for direct attachment of a housing (28) of the auxiliary drive (12) to the side wall and/or bottom wall (18, 20) and/or to the transition area (52).

2. A trailer, in particular camper, boat trailer, sales vehicle, transport trailer or car transport trailer, including at least one auxiliary drive (12) according to claim 1.

3. The trailer according to claim 2, **characterized in that** the living or working structure (16) of the trailer is formed self-supporting

4. The trailer according to claim 2, **characterized in that** the living or working structure (16) of the trailer is arranged on a support frame of the chassis of the trailer or that the living or working structure (16) of the trailer is arranged on a support frame of the trailer and the support frame of the chassis includes at least two longitudinal beams extending parallel to each other or that the living or working structure (16) of the trailer is arranged on a support frame of the chassis of the trailer or that the living or working structure (16) of the trailer is arranged on a support frame of the chassis of the trailer and the support frame of the chassis includes two longitudinal beams arranged V-shaped to each other.

5. The trailer according to any one of claims 2 to 4, **characterized in that** the living or working structure (16) and/or the support frame of the chassis are at least partially composed of a light metal, a fiber-reinforced plastic or a combination of these materials.

## Revendications

1. Entraînement d'assistance pour une remorque, surtout une caravane, une remorque de bateaux, une remorque de vente, une remorque de transport ou une remorque de voitures, dans lequel la remorque comporte un châssis et un montage d'habitation ou un montage de travail, et l'entraînement d'assistance (12) au moins un élément d'entraînement (14) qui peut être mis en prise avec une surface de roulement (54) d'une roue de remorque (22), et comporte au moins un dispositif de fixation et d'appui (10) pour fixer et supporter l'entraînement d'assistance (12) à la remorque, **caractérisé en ce que** le dispositif de fixation et d'appui (10) est agencé sur une paroi latérale et/ou sur une paroi de fond (18, 20) du montage d'habitation ou du montage de travail (16) et/ou dans une zone de transition (52) entre la paroi latérale et la paroi de fond (18, 20) du montage d'habitation ou du montage de travail (16), dans lequel le dispositif de fixation et d'appui (10) comporte au moins un raccord vissé et/ou un raccord par serrage et/ou un raccord par fiche pour une fixation directe d'un boîtier (28) de l'entraînement d'assistance (12) sur la paroi latérale et/ou sur la paroi de fond (18, 20) et/ou dans la zone de transition (52).

2. Remorque, surtout une caravane, une remorque de bateaux, une remorque de vente, une remorque de transport ou une remorque de voitures comportant au moins un entraînement d'assistance (12) selon la revendication 1.

3. Remorque selon la revendication 2, **caractérisé en ce que** le montage d'habitation ou le montage de travail (16) de la remorque est formé de manière autoporteuse.

4. Remorque selon la revendication 2, **caractérisé en ce que** le montage d'habitation ou le montage de travail (16) de la remorque est agencé sur un cadre de support du châssis de la remorque ou que le montage d'habitation ou le montage de travail (16) de la remorque est agencé sur un cadre de support de la remorque et le cadre de support du châssis comporte au moins deux longerons s'étendant parallèlement les uns aux autres ou que le montage d'habitation ou le montage de travail (16) de la remorque est agencé sur un cadre de support du châssis de la remorque ou que le montage d'habitation ou le montage de travail (16) de la remorque est agencé sur un cadre de support du châssis de la remorque et que le cadre de support du châssis comporte deux longerons agencés l'un par rapport à l'autre en forme de V.

5. Remorque selon l'une quelconque des revendications 2 à 4, **caractérisé en ce que** le montage d'habitation ou le montage de travail (16) et/ou le cadre de support du châssis est constitué au moins partiellement d'un métal léger, d'une matière plastique renforcée de fibres ou d'une combinaison de ces matières.
